# EUROPÄISCHE PATENTANMELDUNG

(11) **EP 3 524 799 A1**
(43) Veröffentlichungstag der Anmeldung: **14.08.2019**
(21) Anmeldenummer: 18169890.3
(22) Anmeldetag: 27.04.2018
(51) Int. Cl.: F02C 9/26, F23R 3/34, F23N 1/00, F02C 7/228, F23C 6/02

(54) **VERFAHREN ZUM BETREIBEN EINER BRENNERANORDNUNG EINER GASTURBINE**

(30) Priorität: 13.02.2018 DE 102018202177
(71) Anmelder: Siemens Aktiengesellschaft, 80333 München (DE)
(72) Erfinder: Schmitz, Udo, 45470 Mülheim an der Ruhr (DE); Seiler, Carsten, 45665 Recklinghausen (DE); Wyhnalek, Stefan, 47051 Duisburg (DE)

(57) **Zusammenfassung**

Verfahren zum Betreiben einer Brenneranordnung (16) einer Wärmekraftmaschine, insbesondere einer Gasturbine, mit mehreren Brennern (2), umfassend jeweils mindestens einen Pilotbrenner (6) und mindestens einen Hauptbrenner (8), wobei ausgehend von einem voreingestellten Betrieb der Wärmekraftmaschine lastabhängig
- die Gesamtmenge an Brennstoff zu den Brennern (2) im Wesentlichen konstant gehalten wird,
- bei einer ersten Gruppe (18) von Brennern (2), je Brenner sowohl der Pilotbrenner (6) als auch der Hauptbrenner (8) mit Brennstoff versorgt werden,
- bei einer zweiten Gruppe (20) von Brennern (2) die Brennstoffversorgung zu den Hauptbrennern (8) unterbrochen wird, wobei die Pilotbrenner (6) weiterhin betrieben werden, und
- die durch die Unterbrechung der Brennstoffversorgung zu den Hauptbrennern (8) der zweiten Gruppe übrige Brennstoffmenge auf die noch aktiven Hauptbrenner (8) der ersten Gruppe (18) umverteilt wird.

Durch eine geeignete Verteilung des Brennstoffs zu den einzelnen Brennern (2) werden dabei die CO-Emissionen reduziert.

## Beschreibung

Die Erfindung betrifft ein Verfahren zum Betreiben einer Brenneranordnung einer Wärmekraftmaschine, insbesondere einer Gasturbine, mit mehreren Brennern, umfassend jeweils mindestens einen Pilotbrenner und mindestens einen Hauptbrenner.

Die Mehrfachanordnung von Brennern erzielt bei hohen Gasturbinen-Leistungen ein relativ homogenes Temperaturprofil, welches den Stickoxidausstoß minimiert. Das ist bei hohen Maschinenleistungen aus ökologischen Gesichtspunkten wichtig, weil heiße Strähnen mit kleinen Luftzahlen den Stickoxidausstoß (NOx) erhöhen.

Bei niedrigen Gasturbinen-Leistungen wird die Brennstoffmenge stark reduziert und die Brenner werden auf Grund der veränderten Brennstoff-/Luftmischung mit kälteren Flammen betrieben. Dieser Effekt führt zu einem schlechten Brennstoffausbrand und hohen Kohlenmonoxid (CO) Emissionen im Abgas.

Aktuell wird das Problem der hohen Luftzahlen und vergleichsweise kleinen Verbrennungstemperaturen gelöst, indem die an der Verbrennung beteiligte Luftmenge in der gesamten Brennkammer reduziert wird. Die Schwierigkeit dabei ist, dass die Luftmenge nicht beliebig reduziert werden kann, damit eine kritische Luftzahl, die zu hohen CO-Emissionen und einem schlechten Brennstoffausbrand führt, nicht überschritten wird. Als Folge steigen die Emissionen bei tiefer Leistungsabgabe oder die minimale Leistungsabgabe wird über die zulässigen Emissionen begrenzt.

Der Erfindung liegt die Aufgabe zugrunde, eine verbesserte Betriebsweise einer Brenneranordnung einer Wärmekraftmaschine, insbesondere einer Gasturbine, vorzuschlagen, bei der bei einer niedrigen Leistungsabgabe der Wärmekraftmaschine die CO-Emissionen niedrig gehalten werden.

Die Aufgabe wird erfindungsgemäß gelöst durch ein Verfahren zum Betreiben einer Brenneranordnung einer Wärmekraftmaschine, insbesondere einer Gasturbine, mit mehreren Brennern umfassend jeweils mindestens einen Pilotbrenner und mindestens einen Hauptbrenner, wobei ausgehend von einem voreingestellten Betrieb der Wärmekraftmaschine lastabhängig:
- die Gesamtmenge an Brennstoff zu den Brennern im Wesentlichen konstant gehalten wird,
- bei einer ersten Gruppe von Brennern, je Brenner sowohl der Pilotbrenner als auch der Hauptbrenner mit Brennstoff versorgt werden,
- bei einer zweiten Gruppe von Brennern, die Brennstoffversorgung zu den Hauptbrennern unterbrochen wird, wobei die Pilotbrenner weiterhin betrieben werden, und
- die durch die Unterbrechung der Brennstoffversorgung zu den Hauptbrennern der zweiten Gruppe übrige Brennstoffmenge auf die noch aktiven Hauptbrenner der ersten Gruppe umverteilt wird.

Unter !lastabhängig" wird hierbei verstanden, dass die Gesamtmenge an Brennstoff für eine vorgegebene bzw. eingestellte Last die gleiche bleibt. Unter "lastabhängig" wird insbesondere jegliche Last ab Erreichen der nominalen Drehzahl der Wärmekraftmaschine verstanden. Bei einer Veränderung der Last ist ggf. eine andere Gesamtmenge an Brennstoff erforderlich. Die neue Gesamtmenge wird ebenfalls im Rahmen der technisch möglichen Toleranzen konstant gehalten, solange die Last sich nicht ändert. Leichte Abweichungen vom konstanten Massenstrom sind in der Regel nur bei einem Verbessern des Ausbrandes vorgesehen, d.h. dass eine Verringerung der CO-Emissionen bzw. ein weiterer Ausbrand zu einer kleineren Brennstoffmenge bei konstanter Leistung führen kann. Der voreingestellte Betrieb der Wärmekraftmaschine kann z.B. der Standardbetrieb sein, bei dem alle Pilotbrenner und alle Hauptbrenner mit Brennstoff versorgt werden, das erfindungsgemäße Verfahren ist jedoch nicht nur auf diesen Ausgangszustand eingeschränkt.

"Mehrere Brenner" bedeutet hierbei, dass zumindest zwei Brenner vorgesehen sind, bevorzugt ist jedoch eine Vielzahl von Brennern gemeint. Die Brenner umfassen jeweils einen oder mehrere Pilotbrenner und einen oder mehrere Hauptbrenner. Die Hauptbrenner können als Vormischbrenner ausgeführt sein, dabei werden der Brennstoff und die Verbrennungsluft stromauf der Brennerflamme gemischt. Die Pilotbrenner können sowohl als Vormischbrenner als auch als Diffusionsbrenner und als Kombination ausgeführt sein. Die Pilotbrenner dienen neben dem Anfahren der Gasturbine auch der Verbrennungsstabilisierung, insbesondere der Vormischflamme, im Teil- und Volllastbetrieb.

Unter "Unterbrechung der Brennstoffversorgung zu den Hauptbrennern der zweiten Gruppe" ist hierbei zu verstehen, dass die Brennstoffzufuhr auf null gesetzt wird. Dies erfolgt z.B. durch eine Absperrvorrichtung in der entsprechenden Brennstoffleitung. Insbesondere findet lediglich eine Reduzierung bzw. Variierung der Brennstoffstoffzufuhr zu den Hauptbrennern der zweiten Gruppe nicht statt.

Bei der Umverteilung des Brennstoffs handelt es sich insbesondere um eine gleichmäßige Umverteilung, bei der jedem der noch aktiven Hauptbrenner der gleiche Anteil an der übrigen Brennstoffmenge zugeführt wird.

Die Erfindung basiert auf der Idee, durch eine geeignete Verteilung des Brennstoffs zu den einzelnen Brennern die CO-Emissionen, insbesondere bei niedriger Leistungsabgabe der Wärmekraftmaschine, zu reduzieren und gleichzeitig den Gesamtbrennstoffausbrand zu verbessern. Je nach Betriebsweise der Brenner werden diese in mindestens zwei Gruppen unterteilt, wobei eine Gruppe sowohl eine Vielzahl von Brennern als auch einen einzigen Brenner umfassen kann.

Die erfindungsgemäße Betriebsweise der Brenneranordnung basiert auf folgenden Merkmalen:

Bei den Brennern der ersten Gruppe werden sowohl die Pilotbrenner als auch die Hauptbrenner mit Brennstoff versorgt. Die Brenner der ersten Gruppe werden weiterhin auch als "heiße" Brenner bezeichnet.

Bei mindestens einem Brenner wird die Brennstoffversorgung des Hauptbrenners unterbrochen, was beispielsweise mithilfe von Absperrvorrichtung in den Versorgungsleitungen erfolgt. Dieser eine Brenner oder diese mehreren Brenner bilden die zweite Gruppe. Die Pilotbrenner der zweiten Gruppe bleiben in Betrieb. Die Brenner der zweiten Gruppe werden im Folgenden als "warme" Brenner bezeichnet. Der durch das Abschalten der Hauptbrenner der zweiten Gruppe übrige Brennstoff wird auf die Hauptbrenner der ersten Gruppe (die "heißen" Brenner), deren Versorgung nicht unterbrochen wurde, umverteilt. Das führt zum Betrieb der "heißen" Brenner bei einer kleineren Luftzahl und einer höheren Verbrennungstemperatur und somit zu einem geringeren CO-Ausstoß.

Dabei wird nicht die Gesamtluftmenge des Verdichters und die Luftmenge der gesamten Brennkammer angepasst, um die optimale Luftzahl über die Brenner zu erreichen, sondern erfindungsgemäß kommt es maschinenlastabhängig zu einer gezielten lokalen Umverteilung der Brennstoffmenge mit Hilfe der speziellen Betriebsweise der Brenner. Diese Betriebsweise erlaubt insbesondere im niedrigen Leistungsbereich eine zusätzliche emissionskonforme Reduktion der Leistungsabgabe bzw. eine Reduktion der Emissionen bei konstanter Leistung.

Gemäß einer bevorzugten Ausführungsvariante wird bei einer dritten Gruppe von Brennern die Brennstoffversorgung sowohl zu den Hauptbrennern als auch zu den Pilotbrennern unterbrochen und die übrige Brennstoffmenge wird auf die noch aktiven Hauptbrenner der ersten Gruppe umverteilt. Diese Brenner werden im Folgenden als "kalte" Brenner bezeichnet. Brenner, bei denen die Brennstoffversorgung sowohl zu den Hauptbrennern als auch zu den Pilotbrennern unterbrochen wird, emittieren keine Emissionen. Der übrige Brennstoff wird auf die anderen Hauptbrenner umverteilt, deren Versorgung nicht unterbrochen wurde.

Bei niedrigen Maschinenleistungen ist es somit möglich, entsprechend Brenner im optimalen Luftzahlbereich mit niedrigen CO-Emissionen zu betreiben ("heiße" Brenner). Im Bereich der "kalten" Brenner entstehen keine CO-Emissionen, da diese nicht mit Brennstoff versorgt werden. Die "warmen" Brenner schirmen dabei den "heißen" Bereich in der Brenneranordnung vom "kalten" Bereich der Brenneranordnung ab.

Im Hinblick auf einen sicheren und störungsfreien Betrieb der Brenneranordnung gehören vorzugsweise maximal 30% der Brenner zu der dritten Gruppe. Die dritte Gruppe kann jedoch auch 0 Brenner umfassen, d.h. auf die "kalten" Brenner wird verzichtet. Vorteilhafterweise gehören maximal 40% der Brenner zur zweiten Gruppe.

Gemäß einer weiteren bevorzugten Ausführungsvariante werden die Pilotbrenner der Brenner der zweiten Gruppe mit einer kleineren Luftzahl betrieben als die Pilotbrenner der ersten Gruppe. Hierzu ist der Einbau von zusätzlichen Leitungskomponenten und Armaturen erforderlich, die insbesondere Regelventile in den Leitungen zu den Pilotbrennern zumindest der zweiten Gruppe umfassen. Auch hier gilt, dass die Verbrennung mit einer kleineren Luftzahl eine hohe Verbrennungstemperatur und somit einen niedrigeren CO-Ausstoß zur Folge hat.

Vorteilhafterweise wird die Anzahl der Brenner mit zumindest teilweise unterbrochener Brennstoffversorgung variiert, insbesondere in Abhängigkeit von der Leistung der Wärmekraftmaschine. Dies bedeutet, dass über die Zeit die lastabhängige Gesamtmenge an Brennstoff näherungsweise konstant bleibt, jedoch der Brennstoff im Hinblick auf einen optimalen Betrieb der Wärmekraftmaschine hinsichtlich CO-Emissionen immer wieder neu umverteilt wird. Dabei wird die Anzahl der "heißen", "warmen" und "kalten" Brenner in Abhängigkeit der Leistungsabgabe variiert, um an den "heißen" Brennern immer den optimalen Luftzahlbereich für Emissionen und Hardware (nicht zu heiß und nicht zu kalt) einzustellen. Bevorzugt wird dabei die Anzahl der "warmen" und "heißen" Brenner zu kleinen Leistungen hin reduziert.

Im Hinblick auf niedrige NOx Emissionen werden die Hauptbrenner vorzugsweise im Vormischbetrieb betrieben.

Zweckdienlicherweise wird das oben beschriebene Verfahren bei einer Leistungsabgabe unterhalb der Nennleistung der Wärmekraftmaschine angewendet, z.B. beim Anfahren der Wärmekraftmaschine.

Das erfindungsgemäße Verfahren kann mit anderen Maßnahmen kombiniert werden, um die Emissionen bei niedriger Leistungsabgabe zu reduzieren. Solche Maßnahmen zum Reduzieren der Luftmenge in der Brennkammer sind beispielsweise Reduktion der Gesamtluftmenge z.B. durch weitere Androsselung des Verdichters oder Luftbypass und Re-Design der Pilot-/Hauptbrenner.

Die Aufgabe wird weiterhin erfindungsgemäß gelöst durch ein System zur Durchführung des oben beschriebenen Verfahrens, umfassend eine Brenneranordnung mit mehreren Brennern, die jeweils mindestens einen Pilotbrenner und mindestens einen Hauptbrenner aufweisen, sowie ein Hilfssystem zur Versorgung der Brenner mit Brennstoff. Die in Bezug auf das Verfahren bereits angeführten Vorteile und bevorzugten Ausgestaltungen sind sinngemäß auf das System zu übertragen.

Bevorzugt ist dabei zwischen einem Brenner der ersten Gruppe und einem Brenner der dritten Gruppe zumindest ein Brenner der zweiten Gruppe angeordnet. Die Brenner der zweiten Gruppe dienen dabei primär zum Abschirmen der Brenner der ersten und der dritten Gruppe voneinander. Wird ein "heißer" Brenner durch mindestens einen daneben liegenden "warmen" Brenner abgeschirmt, kann der benachbarte Brenner "kalt" betrieben werden.

Nach einer bevorzugten Ausgestaltung umfasst die Brenneranordnung getrennte Brennstoffleitungen zu den Pilotbrennern und Hauptbrennern, wobei zumindest in den Brennstoffleitungen zu den Hauptbrennern der zweiten Gruppe und der dritten Gruppe Absperrvorrichtungen eingebaut sind.

Vorzugsweise sind die Hauptbrenner als Vormischbrenner ausgeführt.

Nach einer weiteren bevorzugten Ausgestaltung umfasst das Hilfssystem ein erstes Subsystem und ein zweites Subsystem, wobei das erste Subsystem zur Versorgung der Hauptbrenner und der Pilotbrenner der ersten Gruppe eingerichtet ist und das zweite Subsystem zur Versorgung der Pilotbrenner der zweiten Gruppe eingerichtet ist. Hierbei ist vorgesehen, dass die Brennstoffzufuhr durch das erste Subsystem an die Pilotbrenner der ersten Gruppe genau um die Menge an Brennstoff reduziert wird, welche durch das zweite Subsystem den Pilotbrennern der zweiten Gruppe zugeführt wird, wodurch ein konstanter Gesamtmassenstrom an Brennstoff innerhalb des Hilfssystems gewährleistet ist.

Zweckdienlicherweise ist die Brenneranordnung als Ringbrennkammer ausgebildet.

Die Aufgabe wird schließlich erfindungsgemäß gelöst durch eine Gasturbine mit einem oben beschriebenen System. Die in Bezug auf das Verfahren und das System bereits angeführten Vorteile und bevorzugten Ausgestaltungen sind sinngemäß auch auf die Gasturbine zu übertragen.

Ausführungsbeispiele der Erfindung werden anhand einer Zeichnung erläutert. Hierin zeigen die einzelnen Figuren:
- FIG 1: einen Schnitt durch einen Brenner umfassend einen Pilotbrenner und einen Hauptbrenner,
- FIG 2: schematisch eine ringförmige Brenneranordnung mit einer ersten Konstellation von in zwei Gruppen unterteilten Brennern,
- FIG 3: schematisch die ringförmige Brenneranordnung gemäß FIG 1 mit einer zweiten Konstellation von in drei Gruppen unterteilten Brennern, und
- FIG 4: ein Hilfssystem für die Brennstoffversorgung einer Brenneranordnung.

Gleiche Bezugszeichen haben in den Figuren die gleiche Bedeutung.

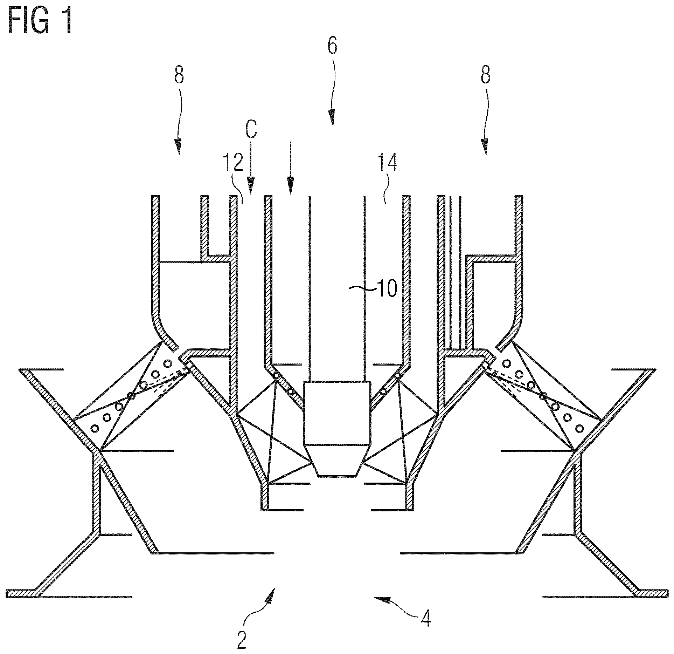

Figur 1 zeigt einen Brenner 2, der in Verbindung mit mehreren gleichartigen Brennern, beispielsweise in der Brennkammer 4 einer nicht näher gezeigten Gasturbinenanlage eingesetzt wird.

Der Brenner 2 besteht aus einem inneren Teil, dem Pilotbrenner 6 und einem konzentrisch dazu liegenden äußeren Teil, dem Hauptbrennersystem oder Hauptbrenner 8. Der Pilotbrenner 6 sowie der Hauptbrenner 8 sind für einen Betrieb mit gasförmigen und/oder flüssigen Brennstoffen in beliebiger Kombination geeignet.

Der Pilotbrenner 6 umfasst einen konzentrisch um einen Kanal 10 herum angeordneten inneren Gaszufuhrkanal 14 (Medium B). Dieser wiederum ist umgeben von einem konzentrisch um die Achse des Brenners 2 angeordneten inneren Luftzufuhrkanal 12 (Medium C). In oder an dem inneren Luftzufuhrkanal 12 kann ein geeignetes Zündsystem angeordnet sein, für welches viele Ausführungsmöglichkeiten bekannt sind und auf dessen Darstellung hier deshalb verzichtet wurde.

Der Pilotbrenner 6 kann in einer an sich bekannten Weise, d.h. überwiegend als ein Diffusionsbrenner, betrieben werden. Seine Aufgabe besteht darin, den Hauptbrenner 8 in einem stabilen Brennbetrieb aufrecht zu erhalten, da dieser zur Verminderung des Schadstoffausstoßes meistens mit einem Magergemisch betrieben wird.

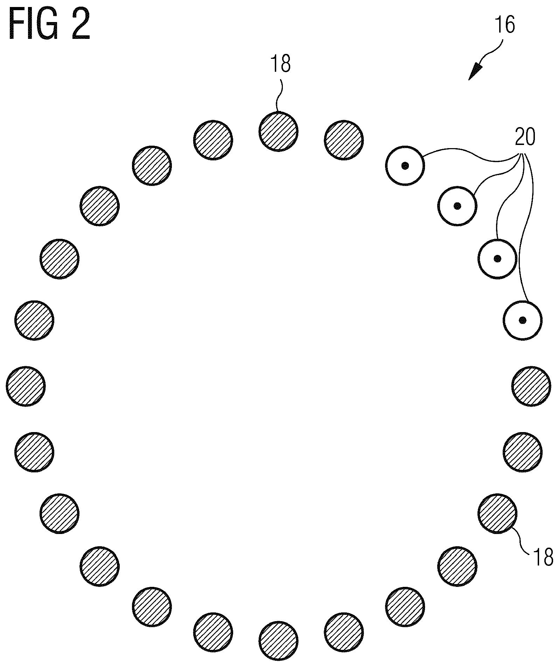

Aus FIG 2 geht eine Brenneranordnung 16 mit einer Mehrzahl von Brennern 2 hervor, die insbesondere Teil einer nicht näher gezeigten Ringbrennkammer einer Gasturbine ist. Die Brenneranordnung 16 umfasst vierundzwanzig Brenner 2. Zwanzig der Brenner, die eine erste Gruppe 18 bilden (dargestellt mit ausgefülltem Kreis), werden als "heiße" Brenner betrieben, d.h. je Brenner 2 werden sowohl der Pilotbrenner 6 als auch der Hauptbrenner 8 mit Brennstoff versorgt. Die weiteren vier Brenner bilden eine zweite Gruppe 20 (dargestellt als Kreis mit Punkt) von "warmen" Brennern 2, bei denen die Brennstoffversorgung zu den Hauptbrennern 8 unterbrochen wird, wobei die Pilotbrenner 6 weiterhin betrieben werden. Hierzu sind in den Leitungen zu den Hauptbrennern 8 Absperrvorrichtungen eingebaut, die innerhalb von wenigen Sekunden, beispielsweise in 2 Sek die Brennstoffzufuhr einstellen. Die durch die Unterbrechung der Brennstoffversorgung zu den Hauptbrennern 8 der zweiten Gruppe 20 übrige Brennstoffmenge wird auf die noch aktiven Hauptbrenner 8 der ersten Gruppe 18 umverteilt. Gleichzeitig kann eine Anpassung der Luftzahl der Pilotbrenner 6 der zweiten Gruppe 20 vorgenommen werden, indem eine kleinere Luftzahl als die der Pilotbrenner 8 der ersten Gruppe 8 eingestellt wird.

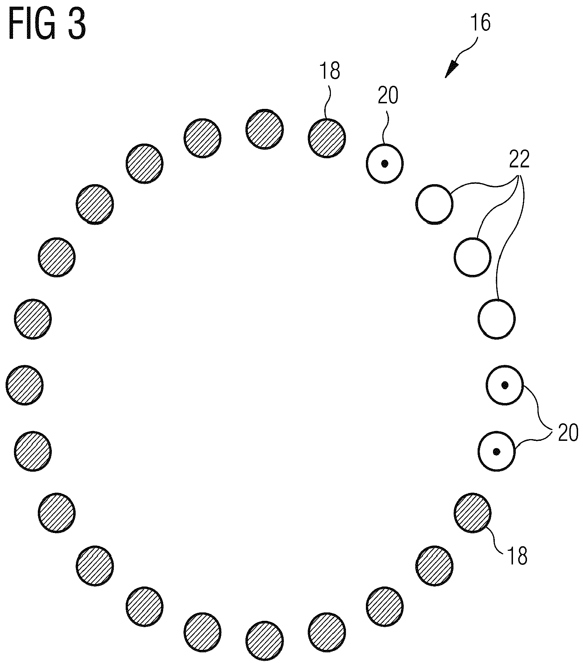

In FIG 3 ist die gleiche Brenneranordnung 16 gezeigt, wobei die Betriebsweise der Brenner 2 eine andere ist. Von den vierundzwanzig Brennern 2 gehören nur achtzehn zur ersten Gruppe 18, drei zu der zweiten Gruppe 20 und drei weitere bilden eine dritte Gruppe 22 von "kalten" Brennern (dargestellt mit Kreis), die komplett von der Brennstoffversorgung abgetrennt sind, so dass weder den Pilotbrennern 6 noch den Hauptbrennern 8 dieser Gruppe 22 Brennstoff zugeführt wird.

Bei dem Übergang von der einen Konstellation zur anderen bleibt die Gesamtmenge an Brennstoff zu der Brenneranordnung 16 lastabhängig stets konstant. Beispielsweise beim Übergang vom Standardbetrieb der Ringbrennkammer mit nur "heißen" Brennern zu einer erfindungsgemäßen Konstellation mit "warmen" und ggf. auch "kalten" Brennern 2 verändert sich die Gesamtmenge an Brennstoff in der Regel nicht. Der Betrieb mit "warmen" und "kalten" Brennern 2 wird insbesondere bei einer Gasturbinenleistung unterhalb der Nennleistung durchgeführt.

Es sind auch weitere Konstellationen mit "heißen", "warmen" und ggf. "kalten" Brennern 2 möglich, beispielsweise können die jeweiligen Gruppen an mehreren Stellen verteilt werden. Wichtig dabei ist jedoch, dass "heiße" Brenner stets durch "warme" Brenner 2 von den "kalten" Brennern 2 abgeschirmt sind, d.h. zwischen einem Brenner 2 der ersten Gruppe 18 und einem Brenner 2 der dritten Gruppe 22 ist zumindest ein Brenner 2 der zweiten Gruppe 20 angeordnet.

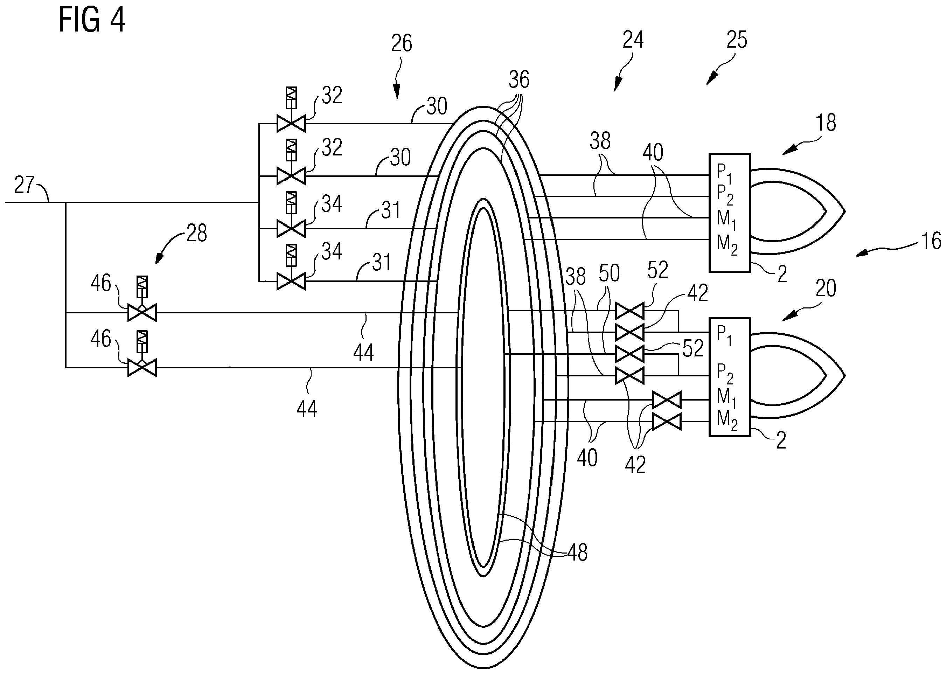

In FIG 4 ist exemplarisch ein Hilfssystem 24 für die Versorgung mit Brennstoff einer Brenneranordnung 16 gezeigt, wobei das Hilfssystem 24 und die Brenneranordnung 16 ein System 25 bilden. Zum Hilfssystem 24 gehört eine zentrale Versorungsleitung 27. Die Brenneranordnung 16 umfasst z.B. vierundzwanzig Brenner, die in zwei Gruppen 18, 20 unterteilt sind, welche Gruppen 18, 20 symbolisch durch zwei Brenner 2 in der Figur angedeutet sind.

Die Brenner 2 der ersten Brennergruppe 18 sind dafür ausgelegt als "heiße" Brenner betrieben zu werden und die Brenner 2 der zweiten Gruppe 20 als "warme" Brenner betrieben zu werden. Jeder der Brenner 2 umfasst in der gezeigten Ausführung einen zweistufigen Pilotbrenner, wobei die zwei Stufen mit P₁, P₂ bezeichnet sind. Jeder der Brenner 2 umfasst zudem einen zweistufigen Hauptbrenner, dessen zwei Stufen mit M₁, M₂ bezeichnet sind. Jedoch sind auch andere Konstellationen von ein- oder mehrstufigen Pilot- und/oder Hauptbrennern denkbar.

Die Brennstoffzufuhr zu beiden Brennergruppen 18, 20 erfolgt im gezeigten Ausführungsbeispiel über getrennt geregelte Versorgungen, indem das Hilfssystem 24 in zwei Subsysteme 26, 28 unterteilt ist.

Das erste Subsystem 26 umfasst erste Leitungen 30 für die Pilotbrennerstufen P₁, P₂, sowie zweite Leitungen 31 für die Hauptbrennerstufen M₁, M₂ beider Brennergruppen 18, 20. Die Brennstoffmenge in den ersten und zweiten Leitungen 30, 31 wird über erste Regelorgane 32 bzw. zweite Regelorgane 34 angepasst, wobei die Regelorgane 32, 34 insbesondere als Regelventile ausgestaltet sind. Die Leitungen 30, 31 münden jeweils in eine Ringleitung 36. Von dort aus werden über erste Stichleitungen 38 beide Pilotbrennerstufen P₁, P₂, aller Pilotbrenner und über zweite Stichleitungen 40 beide Hauptbrennerstufen M₁, M₂, aller Hauptbrennern versorgt. In den Stichleitungen 38, 40 der zweiten Brennergruppe 20 sind zudem Absperrventile 42 eingebaut. Das erste Subsystem 26 ist insbesondere für die Versorgung mit Brennstoff aller Brenner 2 der Brenneranordnung 16 im Standortbetrieb vorgesehen.

Das zweite Subsystem 28 ist ähnlich aufgebaut und umfasst dritte Leitungen 44, in welchen Regelorgane 46 eingebaut sind, nachgeschaltete Ringleitungen 48 und weitere Stichleitungen 50 zu den Pilotbrennerstufen P₁, P₂, der zweiten Gruppe 20, wobei in den weiteren Stichleitungen 50 Absperrventile 52 eingebaut sind.

Im Standardbetrieb, bei dem sowohl die Pilotbrenner 6 als auch die Hauptbrenner 7 der Brenner 2 beider Gruppen 18, 20 betrieben werden, sind die Absperrventile 42 des ersten Subsystems 26 geöffnet und die Absperrventile 52 des zweiten Subsystems 28 sind geschlossen. Beim Wechsel zum "heiß"/"warm"-Betrieb werden alle Absperrventile 42 in den Stichleitungen 38 und 40 der zweiten Gruppe 20 geschlossen, jedoch werden die Absperrventile 52 geöffnet, wodurch die Pilotbrenner der zweiten Gruppe 20 über das zweite Subsystem 28 mit Brennstoff versorgt werden.

Da die Absperrventile 42 zu den Hauptbrennern der zweiten Gruppe 20 geschlossen werden, wird der Brennstoff im ersten Subsystem 26 auf die Hauptbrenner der ersten Gruppe 18 umverteilt. Der Massenstrom an Brennstoff zu den Pilotbrennern der ersten Gruppe 18 wird dabei konstant gehalten. Dies erfolgt, indem die Brennstoffmenge zu den Pilotbrennern der ersten Gruppe 18 durch die Regelventile 32 gedrosselt wird, um die nicht mehr erforderliche Brennstoffmenge zu den Pilotbrennern der zweiten Gruppe 20 zu kompensieren. Dabei verringern die Regelventile 32 den Durchfluss in den ersten Leitungen 30 genau um die Menge, die durch das zweite Subsystem 28 den Pilotbrennern der zweiten Gruppe 20 zugeführt wird. Nach erfolgter Umschaltung ist die Brennstoffmenge der Pilotbrenner der zweiten Gruppe 20 unabhängig von der Brennstoffmenge der Pilotbrenner der ersten Gruppe 38 regelbar und in Abhängigkeit der Last wird eine optimale Menge eingestellt. In Summe bleibt dabei die Gesamtmenge an Brennstoff im Hilfssystem 24 konstant.

Über das gezeigte zweite Subsystem 28 kann die Brenner 2 sowohl als Brenner der zweiten Gruppe 20 als auch der dritten Gruppe 22 betrieben werden, d.h. über das zweite Subsystem 28 kann die Brennstoffzufuhr sowohl zu den Hauptbrennern als auch zu den Pilotbrennern dieser Gruppe unterbrochen werden.

## Patentansprüche

1. Verfahren zum Betreiben einer Brenneranordnung (16) einer Wärmekraftmaschine, insbesondere einer Gasturbine, mit mehreren Brennern (2), umfassend jeweils mindestens einen Pilotbrenner (6) und mindestens einen Hauptbrenner (8), wobei ausgehend von einem voreingestellten Betrieb der Wärmekraftmaschine lastabhängig:
- die Gesamtmenge an Brennstoff zu den Brennern (2) im Wesentlichen konstant gehalten wird,
- bei einer ersten Gruppe (18) von Brennern (2), je Brenner sowohl der Pilotbrenner (6) als auch der Hauptbrenner (8) mit Brennstoff versorgt werden,
- bei einer zweiten Gruppe (20) von Brennern (2) die Brennstoffversorgung zu den Hauptbrennern (8) unterbrochen wird, wobei die Pilotbrenner (6) weiterhin betrieben werden, und
- die durch die Unterbrechung der Brennstoffversorgung zu den Hauptbrennern (8) der zweiten Gruppe übrige Brennstoffmenge auf die noch aktiven Hauptbrenner (8) der ersten Gruppe (18) umverteilt wird.

2. Verfahren nach Anspruch 1,
wobei bei einer dritten Gruppe (22) von Brennern (2) die Brennstoffversorgung sowohl zu den Hauptbrennern (8) als auch zu den Pilotbrennern (6) unterbrochen wird, und die übrige Brennstoffmenge auf die noch aktiven Hauptbrenner (8) der ersten Gruppe (18) umverteilt wird.

3. Verfahren nach Anspruch 2,
wobei maximal 30% der Brenner (2) zu der dritten Gruppe (22) gehören.

4. Verfahren nach einem der vorhergehenden Ansprüche,
wobei maximal 40% der Brenner (2) zur zweiten Gruppe (20) gehören.

5. Verfahren nach einem der vorhergehenden Ansprüche,
wobei die Pilotbrenner (6) der Brenner (2) der zweiten Gruppe (20) mit einer kleineren Luftzahl betrieben werden als die Pilotbrenner (6) der ersten Gruppe (18).

6. Verfahren nach einem der vorhergehenden Ansprüche,
wobei die Anzahl der Brenner (2) mit zumindest teilweise unterbrochener Brennstoffversorgung variiert wird, insbesondere in Abhängigkeit von der Leistung der Wärmekraftmaschine.

7. Verfahren nach einem der vorhergehenden Ansprüche,
wobei die Hauptbrenner (8) im Vormischbetrieb betrieben werden.

8. Verfahren nach einem der vorhergehenden Ansprüche, welches bei einer Leistungsabgabe unterhalb der Nennleistung der Wärmekraftmaschine angewendet wird.

9. System (25) zur Durchführung des Verfahrens nach einem der vorhergehenden Ansprüche, umfassend eine Brenneranordnung (16) mit mehreren Brennern (2), die jeweils mindestens einen Pilotbrenner (6) und mindestens einen Hauptbrenner (8) aufweisen, sowie ein Hilfssystem (24) zur Versorgung der Brenner (2) mit Brennstoff.

10. System (25) nach Anspruch 9,
wobei zwischen einem Brenner (2) der ersten Gruppe (38) und einem Brenner (2) der dritten Gruppe (22) zumindest ein Brenner (2) der zweiten Gruppe (20) angeordnet ist.

11. System (25) nach Anspruch 9 oder 10,
umfassend getrennte Brennstoffleitungen zu den Pilotbrennern (6) und Hauptbrennern (8), wobei zumindest in den Brennstoffleitungen zu den Hauptbrennern (8) der zweiten Gruppe (20) und der dritten Gruppe (22) Absperrvorrichtungen eingebaut sind.

12. System (25) nach einem der Ansprüche 9 bis 11, wobei die Hauptbrenner (8) als Vormischbrenner ausgeführt sind.

13. System (25) nach einem der Ansprüche 9 bis 12,
wobei das Hilfssystem (24) ein erstes Subsystem (26) und ein zweites Subsystem (28) umfasst, wobei das erste Subsystem (26) zur Versorgung der Hauptbrenner (8) und der Pilotbrenner (6) der ersten Gruppe (18) eingerichtet ist und das zweite Subsystem zur Versorgung der Pilotbrenner (6) der zweiten Gruppe (20) eingerichtet ist.

14. System (25) nach einem der Ansprüche 9 bis 13,
wobei die Brenneranordnung (16) als Ringbrennkammer ausgebildet ist.

15. Gasturbine mit einem System (25) nach einem der Ansprüche 9 bis 14.
